# EUROPÄISCHE PATENTSCHRIFT

(11) **EP 0 915 610 B1**
(45) Veröffentlichungstag und Bekanntmachung des Hinweises auf die Patenterteilung: **28.12.2005**
(21) Anmeldenummer: 98440218.0
(22) Anmeldetag: 09.10.1998
(51) Int. Cl.: H04M 15/28, H04M 15/08

(54) **Verfahren zur Übernahme von Gebühren in einzelnen Verbindungen sowie Telefonnetz und Endgerät**
Method, telephone network and terminal for transferring billing informations in individual connections
Procédé, réseau téléphonique et terminal pour la reception d'information de tarification pour connexions individuelles

(30) Priorität: 05.11.1997 DE 19748757
(43) Veröffentlichungstag der Anmeldung: 12.05.1999
(73) Patentinhaber: ALCATEL, 75008 Paris (FR)
(72) Erfinder: Sawatzki, Roland Dr., 89231 Neu-Ulm (DE); Stiefel, Rolf, 70839 Gerlingen (DE)
(74) Vertreter: Rausch, Gabriele

(56) Entgegenhaltungen:
- DE-A- 4 222 235
- US-A- 5 602 907
- PATENT ABSTRACTS OF JAPAN vol. 012, no. 268 (E-638), 27. Juli 1988 (1988-07-27) & JP 63 050247 A (OMRON TATEISI ELECTRONICS CO), 3. März 1988 (1988-03-03)
- PATENT ABSTRACTS OF JAPAN vol. 014, no. 213 (E-0923), 7. Mai 1990 (1990-05-07) & JP 02 048854 A (OMRON TATEISI ELECTRON CO), 19. Februar 1990 (1990-02-19)

## Beschreibung

Die Erfindung geht aus von einem Verfahren zur Übernahme von Gebühren in einzelnen Verbindungen eines Telefonnetzes sowie von einem Telefonnetz und Endgeräten zur Verwendung in einem Telefonnetz nach der Gattung der unabhängigen Ansprüche.

Aus dem Stand der Technik ist bekannt, daß die Übernahme von Gebühren eines Telefongespräches durch den Benutzer angezeigt werden kann, wenn ein Operator das Gespräch vermittelt. Dabei wird mündlich die Übernahme der Gebühr für ein aufzubauendes Telefongespräch mit dem Operator des Telefonnetzbetreibers vereinbart.

Bekannt ist ebenfalls eine Übernahme von Gebühren durch die angerufene Person in einem ISDN-Telefonnetz. In der Druckschrift DE-NA-10017, Januar 1994, ETSI Publikation "Integrated Services Digital Network" wird die Methode bei Verwendung des ISDN-Telefonnetzes erläutert. Dabei kann der Benutzer feste Verbindungen vorwählen, für die die Gebührenübernahme mit dem Netzbetreiber vereinbart ist. Es ist allerdings auch möglich, eine Gebührenübernahme zu signalisieren, wenn ein solcher Dienst vom Anrufer angefordert wurde. Der Benutzer muß dann mit Hilfe eines Paßwortes, das in Form einer Ziffernkombination am Telefonendgerät eingegeben wird, seine Benutzerkennung gegenüber dem Netzbetreiber anzeigen. Dieser Service zur Übernahme von Gebühren muß für den einzelnen Anwender eingerichtet sein. Die Funktion der Gebührenübernahme im ISDN-Festnetz ist an einen bestimmten Teilnehmeranschluß gebunden.

Aus der DE-OS 42 22 235 ist eine Telefonanlage bekannt, deren Endgeräte mit einer Chipkarte bedient werden. Die Chipkarte enthält eine persönliche Verrechnungsnummer für die anfallende Gebühr, die durch Vergleich in einer Datei der Telefonanlage abgeglichen wird. Die einzelnen Endgeräte können nur dann bedient werden, wenn die persönliche Verrechnungsnummer den jeweiligen Benutzer zum Aufbau einer Verbindung berechtigt. Die Telefonendgeräte enthalten für die Durchführung des Verfahrens eine Kartenleseeinheit, die in der Lage ist, die auf einer Chipkarte gespeicherten Informationen zu lesen.
Ebenfalls bekannt ist die Verwendung von sogenannten SIM-Karten (Subscriber Identity Module) für die Verwendung in GSM-Telefonfunknetzen. Diese Karten enthalten eine persönliche Identifikationsnummer, einen Algorithmus und einen persönlichen Teilnehmerschlüssel zur Erzeugung einer Authentikationsinformation, die an eine Zentrale übertragen wird und dort auf die Berechtigung des Benutzers überprüft wird. Die Benutzung der bisher bekannten Chipkarten ermöglicht den Aufbau von Verbindungen, aber keine Übernahme von Gebühren, die erst durch den Anruf eines Dritten entstehen.

Aus dem Patent Abstract of Japan Publication No. 02048854 ist ein Verfahren zum Aufbau eines R-Gespräches bekannt. Hierbei wird über einen feste Zielnummer einen Anfrage an ein empfangendes Endgerät gestartet. Bei Bestätiaung wid die Telefonverbindung aufgebaut. Der angerufenen Teilnehmer hat nur einen Möglichkeit über einen Stimmnachricht pauschal sein Einverständnis zu erklären.

Das erfindungsgemäße Verfahren mit den kennzeichnenden Merkmalen des unabhängigen Anspruchs hat demgegenüber den Vorteil, daß von einem beliebigen Teilnehmerendgerät die Kostenübernahme verbindlich signalisiert werden kann, indem eine auf der Chipkarte gespeicherte Identifikationsnummer ausgelesen und zusammen mit der Bereitschaft zur Übernahme der Gebühr an eine zentrale Einheit übertragen wird.
Weiterbildungen und Verbesserungen des im unabhängigen Anspruch angegebenen Verfahrens möglich.
Besonders vorteilhaft ist es, daß das Identifikationssignal der Chipkarte und nicht die Identifikation des Teilnehmeranschlusses überprüft wird. Damit ist die Verwendung der personalisierten Chipkarte von unterschiedlichen Teilnehmeranschlüssen aus möglich. Der Benutzer kann auf einfache Weise durch Einstecken seiner persönlichen Chipkarte die Gebühren für ein ankommendes Gespräch übernehmen. Das Abprüfen der
Identifikationsnummer sowie das Verbuchen der Kosten der Verbindung auf ein der Identifikationsnummer zugeordnetes Konto erfolgt zentral. Ebenfalls zentral wird die Verwaltung der Nummern vorgenommen.

Mit diesem einfachen Verfahren ist es ohne weiteres möglich, die Übernahme der Kosten für eine bestehende Verbindung zu jedem Zeitpunkt und Zeitraum während der Verbindung zu signalisieren. Dabei kann sowohl eine Kostenverteilung in Kosten vor der Signalisierung der Gebührenübernahme und nach Signalisierung der Gebührenübernahme erfolgen, als auch eine komplette Kostenübernahme für eine Verbindung.

Das erfindungsgemäße Telefonnetz braucht für die Durchführung des Verfahrens geeignete Kommunikationsprotokolle und geeignete Auswertungsmöglichkeiten für das an die Zentrale übertragene verbindliche Kostenübernahmesignal, Abschaltesignal und die Authentikationsinformation. Eine solche Kostenübernahme kann sowohl in einem festen als auch in einem Funktelefonnetz realisiert werden.

Das im erfindungsgemäßen Dienst verwendete Endgerät weist einen Kartenleser für Chipkarten auf, so daß eine verbindliche Siganalisierung zur Kostenübernahme und Abschalten der Kostenübernahme möglich ist. Alternativ kann die Nachricht zur Kostenübernahme durch eine akustisch gekoppelte Einrichtung am Endgerät erzeugt werden, in die eine Chipkarte einführbar ist oder das über eine entsprechende eingebaute Funktionalität verfügt.

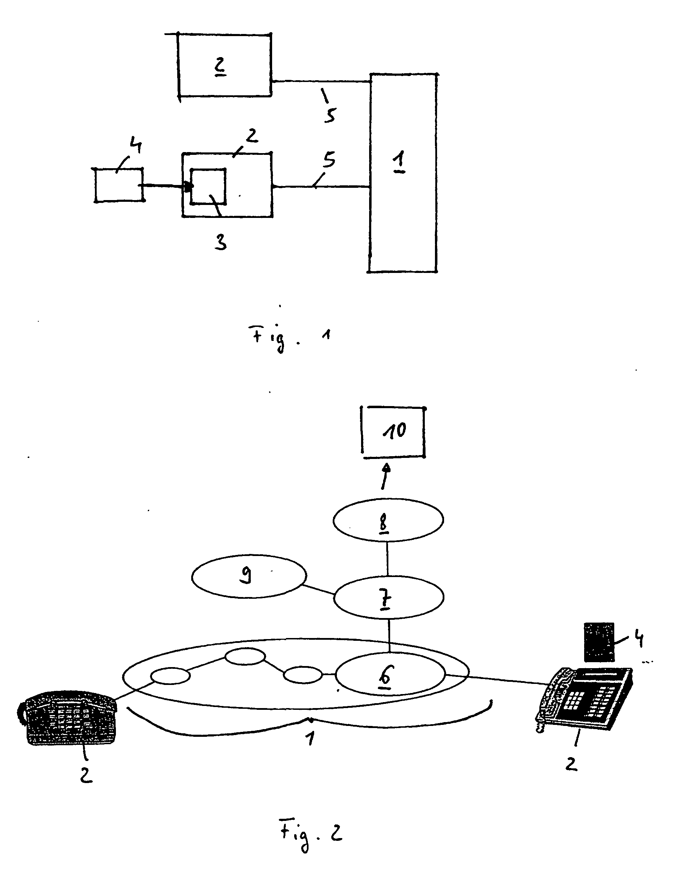

Ein Ausführungsbeispiel der Erfindung ist in der Zeichnung dargestellt und in der nachfolgenden Beschreibung näher erläutert. Es zeigt Figur 1 ein schematisches Telefonnetz und Figur 2 ein Telefonnetz mit intelligenter Netzwerkarchitektur.

In Figur 1 ist eine Zentrale 1 über Verbindungen 5 mit Teilnehmerendgeräten 2 verbunden. Ein Teilnehmerendgerät 2 weist ein Kartenlesegerät 3 auf, in das eine Chipkarte 4 eingesteckt werden kann.

Zur Kostenübernahme einer Verbindung zwischen Teilnehmern kann der angerufene Teilnehmer nach Einführen der Chipkarte 4 in das Kartenlesegerät 3 und einer möglichen Überprüfung des PIN-Codes seine Bereitschaft zur Übernahme der Gebühr der bestehenden Verbindung signalisieren. Dazu wird nach Dienstaufruf, die Identifikationsnummer, die Übernahmenachricht und die Authentikationsinformation, vom Kartenlesegerät des Teilnehmerendgerätes oder der akustischen Zusatzeinrichtung ausgelesen und an die Zentrale 1 gesendet. Die Identifikationsnummer wird an einen Benutzer als persönliche Nummer vergeben, und ist nicht dem Teilnehmer-anschluß zugeordnet. In der Zentrale wird die Authentizität des Teilnehmers und des Übernahmesignals bzw. Abschaltesignals überprüft und anhand der Identifikationsnummer die Zuordnung zu dem Konto des Benutzers vorgenommen. Nach erfolgreicher Überprüfung wird der Ursprungsvermittlungsstelle des Anrufes die Kostenübernahme bzw. das Abschalten der Kostenübernahme von der Zentrale signalisiert und der Anrufer erhält eine Mitteilung, daß die Kostenübernahme wirksam ist bzw. abgeschaltet wurde. Der Teilnehmer erhält entsprechende Informationen. Ist die Überprüfung zur Kostenübernahme nicht erfolgreich dann trägt der Anrufende die Kosten für das Gespräch.

Die Kostenübernahme unter Anwendung der Chipkarte erlaubt dem Teilnehmer Kosten für Telefongespräche und Telekommunikationsdienste von einem Endgerät, das mit einem Kartenleser ausgerüstet ist, zu übernehmen. Die Kostenübernahme ist hierbei beim Verbindungsaufbau, während des Gespräches oder am Ende des Gespräches möglich. Als weitere Option kann der Teilnehmer eine Adressenliste angeben, für die eine Kostenübernahme erfolgen soll. Die Adressenliste kann hierbei auf der Chipkarte oder optional im Netz gespeichert werden. Im gesamten Zeitraum der Verbindung erhält der Teilnehmer nach erfolgter Kostenübernahme auch die Möglichkeit, die Kostenübernahme durch ein Abschaltesignal abzuschalten, so daß der Anrufende die Kosten für den folgenden Zeitraum trägt.
Der Teilnehmer subskribiert den Dienst bei einem Netzbetreiber bzw. Dienstanbieter und erhält eine Chipkarte, die eine persönliche Identifikationsnummer, Schlüssel und Algorithmen zur Erzeugung der Authentikationsinformation, der Übernahme- und Abschaltenachricht und Subskriptionsoptionen des Teilnehmers enthält.
Bei der Subskription kann der Teilnehmer Optionen zur teilweisen oder gesamten Kostenübernahme des Gespräches oder Kostenübernahme bis zu einer Betragsgrenze auswählen.

Nach bekannten Verfahren, wie z.B. bei Chipkarten für den Mobilfunk, GSM, kann der Teilnehmer die Chipkarte optional gegen unerlaubte Fremdnutzung, etwa bei Verlust, mit Hilfe einer PIN (Personal Identification Number) schützen. Dazu erhält der Teilnehmer neben der Chipkarte einen PIN-Brief.
Nach Einfügen der Chipkarte in den Kartenleser kann die Chipkarte für die Dienstnutzung durch Eingabe eines PINs entsperrt werden.

Der Dienstaufruf kann für alle subskribierten Optionen durch den Teilnehmer bzw. dem Endgerät, der Chipkarte, den Anrufer oder den Operator erfolgen. Hierzu werden auf der Chipkarte spezifische Parameter gespeichert, die an die Zentrale geschickt werden.
Die Akzeptanz von Kosten erfolgt durch ein Kosten-Übernahmenachricht, die vom Teilnehmer am Endgerät initiert werden kann und von der Chipkarte zu einer zentralen Einheit gesendet wird. Bei der Nutzung einer Adressenliste wird das Übernahmesignal automatisch durch die Chipkarte mit Unterstützung durch das Endgerät oder durch die Zentrale ausgelöst. Zur Dienstnutzung werden die persönliche Identifikationsnummer und Kostenübernahmesignal und die Authentikationsinformation von der Chipkarte gelesen und an die Zentrale übermittelt. Die Kostenübernahmesignal enthält hierzu Angaben über die subskribierten Optionen.
Der Teilnehmer kann jederzeit die Kostenübernahme durch ein Abschaltesignal, das von der Chipkarte zur Zentrale geschickt wird, stoppen.
Die Authentikationsinformation kann auf verschiedene bereits bekannte Verfahren beruhen, wie z.B. PIN, Message Authentication oder digitale Signatur.
Eine Variante des Verfahrens ermöglicht die Kostenübernahme für jedes ankommende Gespräch nach Einführen der Chipkarte in den Kartenleser, wobei die Akzeptanz der Kostenübernahme solange erfolgt, bis ein Abschaltesignal ausgelöst wird.

Figur 2 zeigt einen Aufbau der Zentrale als intelligentes Netzwerk, in dem die Funktion der Gebührenübernahme auf einfache Weise implementiert werden kann. In der Zentrale 1 stehen die Teilnehmerendgeräte 2 zunächst mit dem Service-Switching-Point 6 in Verbindung. Dieser dienste-neutrale Vermittlungsknoten ist mit dem Service-Control-Point (SCP) der zentralen Dienste -Steuerung 7 verbunden. Mit der zentralen Dienstesteuerung steht wiederum der Service-Management-Point 8 sowie der Service-Data-Point 9 in Verbindung. Für das Verfahren zur Übernahme von Gebühren muß vor allem der zentrale Dienstesteuerung SCP eingerichtet sein. Der SCP steuert und überwacht den Dienstablauf und verifiziert die übertragenen Kostenübernahme- und Abschaltesignale und die Authentikationsinformation. Hierbei kann er vom Service Data Point 9 unterstützt werden. Bei erfolgreicher Verifikation werden die Kosten im Service-Management-Point 8, der die Verwaltung der Gebühren sowie der Dienstteilnehmerenthält, verrechnet. Der Service-Management-Point 8 ist mit einer Verwaltung 10 verbunden, die die Verwaltung der Karten, der Identifikationsnummern, deren Vergabe und deren Zuordnung zu einer Benutzerperson überwacht.

Die Realisierung des Verfahrens zur Übernahme von Gebühren in einzelnen Verbindungen eines Telefonnetzes ist ohne weiteres auch in anderen Systemarchitekturen möglich. Dabei müssen die Verbindungen nicht wie im vorliegenden Beispiel feste Verbindungen sein, sondern es kann sich auch um Funknetze handeln. Da in Funknetzen die Identifikation und Authentikation der Teilnehmer über eine Chipkarte erfolgen kann und die zentrale Verwaltung bereits für die Überprüfung der Identifikationsnummern und Konten vorgesehen ist, kann die Aufnahme der Funktion der Übernahme von Gebühren besonders einfach sein. Es ist beim Aufbau einer Funkverbindung dann lediglich notwendig, daß der angerufene Teilnehmer, der bereits über seine Chipkarte identifiziert ist, ein Kostenübernahmesignal an die Zentrale überträgt.

## Patentansprüche

1. Verfahren zur Übernahme von Gebühren in einzelnen Verbindungen eines Telefonnetzes, in dem Teilnehmerendgeräte (2) mit einer zentralen Einheit (1) verbunden sind, **dadurch gekennzeichnet, daß** der angerufene Teilnehmer die Kostenübernahme signalisiert, indem mit Hilfe einer Chipkarte (4) über einen Chipkartenleser des Teilnehmerendgerätes (2) eine Nachricht zur Kostenübernahme erzeugt und an die zentrale Einheit (1) übertragen wird.

2. Verfahren nach Anspruch 1, **dadurch gekennzeichnet, daß** die Nachricht zur Kostenübernahme eine durch Verschlüsselung gesicherte Nachricht ist.

3. Verfahren nach einen der vorhergehenden Ansprüche, **dadurch gekennzeichnet, daß** die Chipkarte (4) eine Identifikationsnummer, mindestens einen geheimen Teilnehmerschlüssel und Verschlüsselungs-Algorithmen zur Erzeugung der Authentikationsinformation und der Nachricht zur Kostenübernahme enthält.

4. Verfahren nach einem der vorhergehenden Ansprüche, **dadurch gekennzeichnet, daß** die zentrale Einheit (1) die übertragenen Signale überprüft und die zu übernehmenden Kosten der Verbindung auf dem der Identifikationsnummer zugeordneten Konto verbucht.

5. Verfahren nach einem der vorhergehenden Ansprüche, **dadurch gekennzeichnet, daß** die Identifikationsnummern und die geheimen Teilnehmerschlüssel von einer zentralen Verwaltung des Netzbetreibers vergeben werden.

6. Verfahren nach einem der vorhergehenden Ansprüche, **dadurch gekennzeichnet, daß** die Übernahme der Kosten für eine bestehende Verbindung zu jedem Zeitpunkt während der Verbindung signalisiert und /oder unterbrochen werden kann.

7. Verfahren nach einem der vorhergehenden Ansprüche, **dadurch gekennzeichnet, daß** die Übernahme der Kosten beim Verbindungsaufbau signalisiert werden kann.

8. Verfahren nach einem der vorhergehenden Ansprüche, **dadurch gekennzeichnet, dass** das Identifikationssignal gleichzeitig als Kostenübernahmesignal ausgewertet wird.

9. Verfahren nach einem der vorhergehenden Ansprüche, **dadurch gekennzeichnet, dass** die Kostenübernahmefunktion zu jedem Zeitpunkt während der Verbindung oder bei einer vereinbarten Kostengrenze abgebrochen werden kann.

10. Telefonnetz bestehend aus Endgeräten (2) und mindestens einer zentralen Einheit (1), wobei die zentrale Einheit (1) in einer intelligenten Netzwerk-Architektur aufgebaut ist und Mittel zur Erfassung von Teilnehmern, von Identifikationsnummern von einzelnen Kartenbenutzern und von Konten (8, 10) enthält, sowie Mittel zur Überprüfung von empfangenen Identifikationsnummern (9), die mit einer Chipkarte (4) und einem Kartenleser (3) im Endgerät (2) ausgelesen werden, und Mittel zum Verbuchen von Kosten auf einem einer Identifikationsnummer zugeordneten Konto (8, 10) enthält,
**dadurch gekennzeichnet, dass** Mittel zum Verarbeiten eines übertragenen Kostenübernahmesignals vorhanden sind, die derart ausgebildet sind, das Kostenübernahmesignal vom angerufenen Endgerät im Telefonnetz zu empfangen.

11. Telefonnetz nach Anspruch 10, **dadurch gekennzeichnet, dass** die Verbindungen zwischen zentraler Einheit (1) und Endgeräten Fest- oder Funkverbindungen sind.

12. Endgerät (2) mit einem Kartenlesegerät (3) für Chipkarten (4), **dadurch gekennzeichnet, dass** das Endgerät Mittel zur Erzeugung eines Kostenübernahmesignals aufweist und Mittel zum Senden des Kostenübernahmesignals an die zentrale Einheit (1), sowie Mittel zu einer Identifikation des Benutzers über die Chipkarte (4) und Mittel zum Auslösen des Kostenübernahmesignals durch das angerufene Endgerät enthält.

13. Endgerät (2) nach Anspruch 12,
**dadurch gekennzeichnet, dass** das Endgerät Mittel zum Lesen eines Kostenübernahmesignals von der in das Kartenlesegerät eingeführten Chipkarte und Mittel zum Senden des Kostenübernahmesignals an die Zentrale (1) aufweist.

14. Endgerät (2) nach Anspruch 12,
**dadurch gekennzeichnet, dass** eine akustisch gekoppelte Einrichtung am Endgerät zur Erzeugung des Kostenübernahmesignals vorhanden ist, in die eine Chipkarte einführbar ist oder das über eine entsprechende eingebaute Funktionalität verfügt.

## Claims

1. A method of accepting charges in individual connections of a telephone network in which subscriber terminals (2) are connected to a central unit (1), **characterized in that** the called subscriber signals the acceptance of the cost by producing a cost acceptance message with the help of a chip card (4) via a chip card reader in the subscriber terminal (2), and the message is transmitted to the central unit (1).

2. A method as claimed in claim 1, **characterized in that** the cost acceptance message is a message that is encoded for security purposes.

3. A method as claimed in one of the preceding claims, **characterized in that** the chip card (4) contains an identification number, at least one secret subscriber code and encoding algorithms for producing the authentication information and the cost acceptance message.

4. A method as claimed in one of the preceding claims, **characterized in that** the central unit (1) verifies the transmitted signals and records in the account assigned to the identification number the connection cost to be accepted.

5. A method as claimed in one of the preceding claims, **characterized in that** the identification number and the secret subscriber codes are supplied by a central management of the network operator.

6. A method as claimed in one of the preceding claims, **characterized in that** the cost acceptance of an existing connection can be signalled and/or interrupted at any time during the connection.

7. A method as claimed in one of the preceding claims, **characterized in that** the cost acceptance can be signalled when the connection is being established.

8. A method as claimed in one of the preceding claims, **characterized in that** the identification signal is simultaneously evaluated as a cost acceptance signal.

9. A method as claimed in one of the preceding claims, **characterized in that** the cost acceptance function can be interrupted at any time during the connection or when an agreed cost limit has been reached.

10. A telephone network comprising terminals (2) and at least one central unit (1), where the central unit (1) is established in an intelligent network architecture and contains means for detecting subscribers, identification numbers of individual card users and accounts (8, 10), as well as means for verifying received identification numbers (9) which are read by means of a chip card (4) and a card reader (3) in the terminal (2), and means for recording costs in an account (8, 10) assigned to an identification number, **characterized in that** means for processing a transmitted cost acceptance signal are provided which are developed in such a way as to receive the cost acceptance signal from the called terminal in the telephone network.

11. A telephone network as claimed in claim 10, **characterized in that** the connections between the central unit (1) and terminals can be permanent connections or radio links.

12. A terminal (2) with a card reading device (3) for chip cards (4), **characterized in that** the terminal has means of producing a cost acceptance signal and contains means of sending the cost acceptance signal to the central unit (1), and also means for an identification of the user by the chip card (4) and means of triggering the cost acceptance signal by the called terminal.

13. A terminal (2) as claimed in claim 12, **characterized in that** the terminal has means of reading a cost acceptance signal from the chip card inserted in the card reading device and means of sending the cost acceptance signal to the central unit (1) .

14. A terminal (2) as claimed in claim 12, **characterized in that** an acoustically coupled device into which a chip card can be inserted is present in the terminal for producing the cost acceptance signal, or with a corresponding built-in functionality.

## Revendications

1. Procédé d'acceptation de la taxation à l'arrivée dans les liaisons individuelles d'un réseau téléphonique dans lequel des terminaux d'abonné (2) sont reliés avec une unité centrale (1), **caractérisé en ce que** l'abonné appelé signale l'acceptation de la taxation à l'arrivée **en ce qu'**une information d'acceptation de la taxation à l'arrivée est générée à l'aide d'une carte à puce (4) par le biais d'un lecteur de carte du terminal d'abonné (2) et transmise à l'unité centrale (1).

2. Procédé selon la revendication 1, **caractérisé en ce que** l'information d'acceptation de la taxation à l'arrivée est une information sécurisée par cryptage.

3. Procédé selon l'une des revendications précédentes, **caractérisé en ce que** la carte à puce (4) contient un numéro d'identification, au moins un code d'abonné secret et des algorithmes de cryptage pour générer l'information d'authentification et l'information relative à l'acceptation de la taxation à l'arrivée.

4. Procédé selon l'une des revendications précédentes, **caractérisé en ce que** l'unité centrale (1) contrôle les signaux transmis et comptabilise la taxation à accepter à l'arrivée de la liaison sur le compte associé au numéro d'identification.

5. Procédé selon l'une des revendications précédentes, **caractérisé en ce que** les numéros d'identification et le code d'abonné secret sont attribués par un gestionnaire central de l'exploitant du réseau.

6. Procédé selon l'une des revendications précédentes, **caractérisé en ce que** l'acceptation de la taxation à l'arrivée pour une liaison existante peut être signalée et/ou interrompue à tout moment pendant la liaison.

7. Procédé selon l'une des revendications précédentes, **caractérisé en ce que** l'acceptation de la taxation à l'arrivée peut être signalée lors de l'établissement de la liaison.

8. Procédé selon l'une des revendications précédentes, **caractérisé en ce que** le signal d'identification est en même temps interprété comme un signal d'acceptation de la taxation à l'arrivée.

9. Procédé selon l'une des revendications précédentes, **caractérisé en ce que** la fonction d'acceptation de la taxation à l'arrivée peut être interrompue à tout moment pendant la liaison ou à une limite de coût convenue.

10. Réseau téléphonique composé de terminaux (2) et d'au moins une unité centrale (1), l'unité centrale (1) étant construite dans une architecture de réseau intelligent et comprenant des moyens de détection des abonnés, des numéros d'identification des utilisateurs individuels des cartes et des comptes (8, 10), et comprenant des moyens pour contrôler les numéros d'identification (9) reçus, lesquels sont lus avec une carte à puce (4) et un lecteur de carte (3) dans le terminal (2) ainsi que des moyens pour comptabiliser les coûts sur un compte (8, 10) associé à un numéro d'identification, **caractérisé en ce qu'**il existe des moyens pour traiter un signal d'acceptation de la taxation à l'arrivée qui sont configurés de manière à recevoir le signal d'acceptation de la taxation à l'arrivée du terminal appelé dans le réseau téléphonique.

11. Réseau téléphonique selon la revendication 10, **caractérisé en ce que** les liaisons entre l'unité centrale (1) et les terminaux sont des liaisons fixes ou de radiocommunication.

12. Terminal (2) comprenant un lecteur de carte (3) pour des cartes à puce (4), **caractérisé en ce que** le terminal présente des moyens pour générer un signal d'acceptation de la taxation à l'arrivée et contient des moyens pour envoyer le signal d'acceptation de la taxation à l'arrivée à l'unité centrale (1) ainsi que des moyens pour une identification de l'utilisateur par le biais de la carte à puce (4) et des moyens pour déclencher le signal d'acceptation de la taxation à l'arrivée par le terminal appelé.

13. Terminal (2) selon la revendication 12, **caractérisé en ce que** le terminal présente des moyens pour lire un signal d'acceptation de la taxation à l'arrivée de la carte à puce introduite dans le lecteur de carte et des moyens pour envoyer le signal d'acceptation de la taxation à l'arrivée à la centrale (1).

14. Terminal (2) selon la revendication 12, **caractérisé en ce qu'**il existe sur le terminal un dispositif à couplage acoustique destiné à générer le signal d'acceptation de la taxation à l'arrivée dans lequel peut être introduite une carte à puce ou qui dispose d'une fonctionnalité intégrée correspondante.
